# EUROPÄISCHE PATENTSCHRIFT

(11) **EP 2 126 495 B1**
(45) Veröffentlichungstag und Bekanntmachung des Hinweises auf die Patenterteilung: **13.04.2016**
(21) Anmeldenummer: 07847964.9
(22) Anmeldetag: 07.12.2007
(51) Int. Cl.: E04B 1/80, F25D 23/06

(54) **KÄLTEGERÄT**
REFRIGERATING APPLIANCE
APPAREIL RÉFRIGÉRANT

(30) Priorität: 22.12.2006 DE 102006061085
(43) Veröffentlichungstag der Anmeldung: 02.12.2009
(73) Patentinhaber: BSH Hausgeräte GmbH, 81739 München (DE)
(72) Erfinder: FEINAUER, Adolf, 89537 Giengen (DE); HELL, Erich, 89537 Giengen (DE)
(86) Internationale Anmeldenummer: PCT/EP2007/063499
(87) Internationale Veröffentlichungsnummer: WO 2008/077741

(56) Entgegenhaltungen:
- WO-A-02/103127
- DE-U1-202006 009 620
- US-A- 3 150 793
- US-A1- 2005 042 416

## Beschreibung

Die Erfindung betrifft eine wärmeisolierende Wand nach dem Oberbegriff von Anspruch 1.

Wärmeisolierende Wandungen von Kältegeräten wie Kühlschränke oder Kühl-/Gefrierkombinationen bestehen heute üblicherweise aus einer Innenschale, die in einem äußeren Gehäuse verankert wird, welches aus Deckel, Boden, Seitenwänden und Rückwand besteht. Nachdem der Kälteerzeuger und die elektrischen Komponenten montiert sind, wird der Zwischenraum zwischen Innenschale und äußerem Gehäuse ausgeschäumt. Dieses Verfahren ist verhältnismäßig aufwändig und daher teuer.

Transportable Kühlboxen in geringerer Größe werden oftmals bereits preisgünstiger hergestellt. Zum Bau dieser Kühlboxen werden vorgefertigte Vakuumpaneelen verwendet, die zu einem entsprechenden Gehäuse zusammengesetzt werden. Diese Vakuumpaneelen bestehen üblicherweise aus einer gasdichten Außenhaut die einen Formkörper umschließt, der aus komprimiertem Schüttgut besteht. Als Schüttgut werden Kieselsäure oder Aerogele verwendet. Diese Paneelen werden evakuiert und versiegelt. Hierdurch wird eine begrenzte Steifigkeit und Stabilität erreicht. Um ein Kältegerät in der üblichen Größe damit aufzubauen ist die Festigkeit dieser Vakuumpaneelen jedoch nicht ausreichend.

Die Offenlegungsschrift US 2005/0042416 A1 zeigt eine Wärmeisolierende Wand gemäß dem Oberbegriff des Anspruchs 1.

Die Gebrauchsmusterschrift DE 20 2006 009620 U1 zeigt eine Vakuum-Isolationsplatte aufweisend mindestens eine flächige Kernstruktur mit mindestens zu einer Seite hin offenen Kammer, wobei in den Kammern mikroporöse Partikel angeordnet sind und eine die flächige Kernstruktur allseitig umgebende folienartige Struktur vorgesehen ist, die durch Anlage eines Vakuums an die flächige Kernstruktur angelegt ist und die einzelnen Kammern pneumatisch voneinander isoliert.

Die Patentschrift US 3,150,793 zeigt eine Vakuum-Isolationsplatte mit einer Honigwabenstruktur.

Die Offenlegungsschrift WO 02/103127 A1 zeigt eine thermische und akustische Isolationsplatte mit einer Honigwabenstruktur.

Der Erfindung liegt die Aufgabe zugrunde ein wärmeisolierende Wand so aufzubauen, dass es preisgünstig hergestellt werden kann und trotzdem die notwendige Festigkeit und Stabilität besitzt.

Gelöst wird die Aufgabe gemäß der Erfindung durch eine wärmeisolierende Wand mit den Merkmalen von Anspruch 1. Mit einem wabenförmigen Stützgerüst versehene wärmeisolierende Wände können mit einer Steifigkeit hergestellt werden, die auch den Bau größerer Gehäuse zulässt. Diese Wände, die eine gasdichte Außenhaut besitzen und evakuiert werden, können zu einem Gehäuse verbunden werden und so den Innenraum des Kältegeräts begrenzen, oder als Kältegerätegehäuse mit einer davon angeschlagenen Tür oder als sogenannte Vakuumisolationspaneele ausgebildet sein, die in der Schaumisolierung der Kältegeräte verankert sind..

Die Waben des Stützgerüstes sind mit Schüttgut befüllt. Hierdurch wird zum einen die Festigkeit weiter erhöht, zum anderen ergibt sich dadurch eine glattere Oberfläche, da die Außenhaut nicht in die wabenförmige Struktur eingedrückt werden kann.

Das Schüttgut zum Auffüllen der wabenförmigen Struktur des Stützkörpers weist vorteilhafter Weise Kieselsäure und/oder Aerogele auf. Diese Materialien haben sich bereits in den bekannten auf Vakuumisolationstechnik beruhenden wärmeisolierenden Wänden bewährt und garantieren eine hervorragende Isolationswirkung. Aus den so gefertigten wärmeisolierenden Wänden lässt sich folglich ein Gehäuse für Kältegeräte mit hoher Festigkeit und ausgezeichneten Isolationseigenschaften aufbauen.

Da das wabenförmige Stützgerüst aus einem festen Material besteht, findet durch das Stützgerüst ein gewisser Wärmedurchgang von außen nach innen statt. Das Stützgerüst wird deswegen in mehrere Lagen aufgeteilt, die gegeneinander versetzt sind. Auf diese Weise kann der Wärmeübergang von einer Lage in die nächste nur punktuell erfolgen. Hierdurch lassen sich die Isolationseigenschaften weiter verbessern. Idealerweise wird das Stützgerüst aus vier Lagen aufgebaut. Durch das Versetzen der einzelnen Lagen stehen alle Hohlräume miteinander in Verbindung. Das Befüllen mit Schüttgut kann daher wesentlich einfacher erfolgen.

Bei einer Dicke von 5 mm pro Lage entsteht ein Gehäuse für ein Kältegerät, welches eine Stärke von lediglich 2 cm aufweist. Die Isolationswirkung dieses Gehäuses ist bei weitem besser als die der heute üblichen geschäumten Gehäuse. Durch das gegenseitige Versetzen der vier Lagen erhöht sich auch die Festigkeit so weit, dass die Stabilität des Gehäuses mit der Stabilität der heute üblichen Gehäuse ohne weiteres vergleichbar ist.

Die Waben des Stützgerüstes können rechteckig ausgeformt sein. Eine höhere Festigkeit lässt sich jedoch noch mit einer hexagonalen Wabenstruktur erreichen.

Die Formteile lassen sich unterschiedlich gestaltet herstellen. So kann beispielsweise die Rückwand eine Stufe aufweisen unter der der Kompressor des Kälteerzeugers untergebracht wird. Idealerweise sind die Formteile jedoch als glatte Paneelen hergestellt. Dies erleichtert den Zusammenbau und verbilligt die Herstellung sowohl der einzelnen Formteile als auch des Kältegeräts.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigen:
- Fig. 1: eine Explosionsdarstellung des Gehäuses eines erfindungsgemäßen Kältegeräts und
- Fig. 2: einen Ausschnitt des Stützgerüstes einer Vakuumpaneele.

Die Erfindung ist beispielhaft anhand eines aus wärmeisolierenden Wandteilen aufgebauten Kältegeräts erläutert.

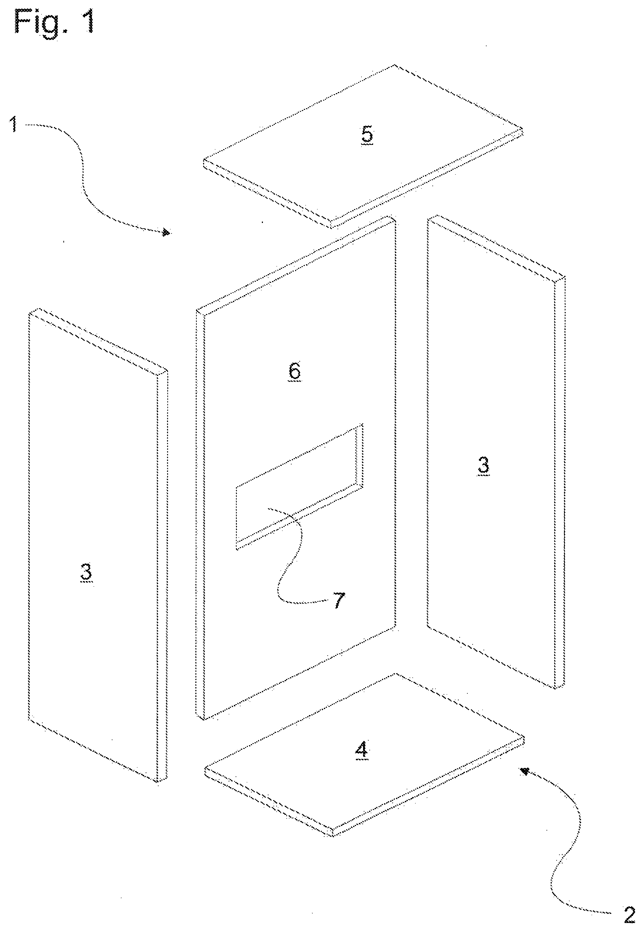

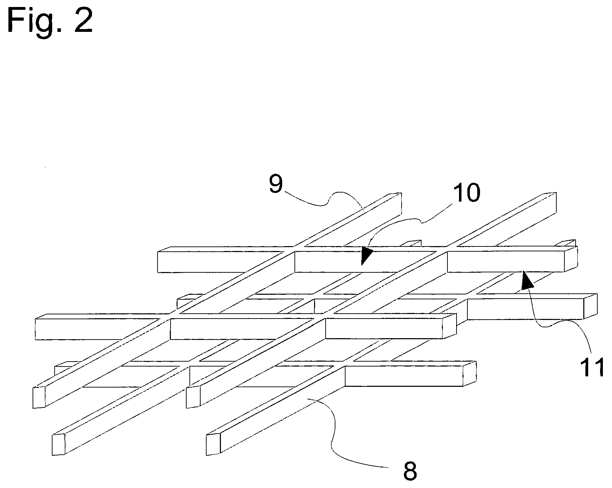

Figur 1 zeigt ein solches Kältegerät 1, dessen Innenraum 2 von zwei Seitenwänden 3, einem Boden 4, einem Deckel 5 und einer Rückwand 6 begrenzt ist. Die zugehörige Türe ist hier nicht dargestellt. Die Seitenwände 3, der Boden 4, der Deckel 5 und die Rückwand 6 bestehen aus Vakuumpaneelen mit einem wabenförmigen Stützgerüst, wie es aus Figur 2 ersichtlich ist. Die Paneelen sind so ausgebildet, dass auch ihre Schmalseiten keine Wärmebrücken bilden. Sie werden werksseitig so zu einem Gehäuse verbunden, dass durch die Verbindungstechnik ebenfalls keine Wärme von Außen in den Innenraum gelangen kann. Die Rückwand 6 enthält bei dem hier gezeigten Ausführungsbeispiel etwa in der Mitte eine Öffnung 7, die so geformt ist, dass ein Peltierelement hierin Platz findet.

In Figur 2 ist ein zweilagiges Stützgerüst mit rechteckigen Waben 10 gezeigt. Die obere Lage 9 ist gegenüber der unteren Lage 8 versetzt angeordnet. Ein Wärmeübergang von der unteren Lage 8 zur oberen Lage 9 kann daher nur über die Berührungspunkte 11 erfolgen. Dadurch lässt sich der Wärmeübergang stark reduzieren. Bei einer vierlagigen Anordnung, die hier aus Übersichtlichkeitsgründen nicht gezeigt ist, verringert sich der Wärmeübergang zwischen der oberen und der unteren Lage noch mehr.

Durch das Versetzen der Lagen 8 und 9 stehen die Waben 10 miteinander in Verbindung. Die Waben 10 können daher ohne Schwierigkeiten befüllt werden. Bei einer vierlagigen Anordnung wird auch das Befüllen durch die zusätzlich geschaffenen Verbindungen zwischen den Waben 10 noch einfacher.

Mit den beschriebenen Formteilen ist jedes Gehäuse für ein Kältegerät realisierbar. Ist der Kälteerzeuger in herkömmlicher Weise aus einem Kompressor, einem Verflüssiger und einem Verdampfer aufgebaut, besitzt die Rückwand üblicherweise eine Stufe, so dass der Kompressor an der Außenseite unter dieser Stufe montiert werden kann. Auch ein so gestaltetes Formteil ist mit dem Stützgerüst herstellbar.

Bei dem in Figur 1 gezeigten Gehäuse sind alle Begrenzungswände 3, 4, 5 und 6 aus entsprechend aufgebauten glatten Vakuumpaneelen hergestellt. Durch die Verwendung eines Peltierelements in der Öffnung 7 als Kälteerzeuger muss die Rückwand 6 keine Stufe für die Unterbringung eines Kompressors enthalten. Auf diese Weise können sämtliche Begrenzungswände in gleicher Weise hergestellt werden. Ein so aufgebautes Kältegerät ist sehr preisgünstig herzustellen und besitzt hervorragende Isolationseigenschaften. Durch das Stützgerüst in den Paneelen wird auch die notwendige Belastbarkeit des Gehäuses erreicht.

### Bezugszeichenliste:

- 1: Kältegerät
- 2: Innenraum
- 3: Seitenwände
- 4: Boden
- 5: Deckel
- 6: Rückwand
- 7: Öffnung
- 8: untere Lage des Stützgerüstes
- 9: obere Lage des Stützgerüstes
- 10: Waben
- 11: Berührungspunkte

## Patentansprüche

1. Wärmeisolierende Wand mit wenigstens annähernd gasdichten Begrenzungswänden für ein Kältegerät (1) mit einem Kälteerzeuger und einem gekühlten Innenraum (2), der von wärmeisolierten Begrenzungswänden begrenzt ist, wobei zwischen den Begrenzungswänden wenigstens ein wabenförmiges Stützgerüst (8, 9) vorgesehen ist, welches von einer gasdichten Außenhaut umgeben ist, wobei das Stützgerüst (8, 9) mehrere Lagen (8, 9) aufweist, die gegeneinander versetzt angeordnet sind, **dadurch gekennzeichnet, dass** die Waben (10) des Stützgerüstes (8, 9) mit Schüttgut gefüllt sind.

2. Wärmeisolierende Wand nach Anspruch 1, **dadurch gekennzeichnet, dass** das Schüttgut aus Kieselsäure und/oder Aerogele gebildet ist.

3. Wärmeisolierende Wand nach einem der vorherigen Ansprüche, **dadurch gekennzeichnet, dass** das Stützgerüst (8, 9) vier Lagen aufweist.

4. Wärmeisolierende Wand nach einem der vorherigen Ansprüche, **dadurch gekennzeichnet, dass** jede Lage (8, 9) eine Dicke von 5 mm aufweist.

5. Wärmeisolierende Wand nach einem der Ansprüche 1 bis 4, **dadurch gekennzeichnet, dass** die Waben (10) des Stützgerüstes (8, 9) hexagonal geformt sind.

6. Kältegerät (1) mit einem Kälteerzeuger und einem gekühlten Innenraum (2) der von wärmeisolierenden Begrenzungswänden umgeben ist, **dadurch gekennzeichnet, dass** die Begrenzungswände aus einer wärmeisolierenden Wand nach einem der Ansprüche 1 bis 5 gebildet sind oder die Begrenzungswände eine wärmeisolierende Wand nach einem der Ansprüche 1 bis 5 in sich aufnehmen.

## Claims

1. Heat-insulating wall comprising at least approximately gas-tight delimiting walls for a refrigerating appliance (1) which has a refrigeration unit and a cooled internal space (2), which is delimited by heat-insulating delimiting walls, wherein provided between the delimiting walls is at least one honeycomb-shaped support frame (8, 9) which is surrounded by a gas-tight outer skin, wherein the support frame (8, 9) has a plurality of layers (8, 9), which are arranged offset relative to one another, **characterised in that** the honeycomb cells (10) of the support frame (8, 9) are filled with bulk material.

2. Heat-insulating wall according to claim 1, **characterised in that** the bulk material is formed from silica and/or aerogels.

3. Heat-insulating wall according to one of the preceding claims, **characterised in that** the support frame (8, 9) has four layers.

4. Heat-insulating wall according to one of the preceding claims, **characterised in that** each layer (8, 9) has a thickness of 5 mm.

5. Heat-insulating wall according to one of claims 1 to 4, **characterised in that** the honeycomb cells (10) of the support frame (8, 9) are hexagonal in shape.

6. Refrigerating appliance (1) comprising a refrigeration unit and a cooled internal space (2) which is surrounded by heat-insulating delimiting walls, **characterised in that** the delimiting walls are made from a heat-insulating wall according to one of claims 1 to 5 or the delimiting walls accommodate within them a heat-insulating wall according to one of claims 1 to 5.

## Revendications

1. Paroi calorifuge comprenant des parois de délimitation au moins approximativement étanches au gaz pour un appareil frigorifique (1) muni d'un générateur de froid et d'un espace intérieur réfrigéré (2) qui est délimité par les parois de délimitation calorifugées, au moins une structure de soutien (8, 9) en forme de nids d'abeilles étant ménagée entre les parois de délimitation, laquelle est entourée par une peau extérieure étanche au gaz, la structure de soutien (8, 9) présentant plusieurs couches (8, 9) qui sont disposées en étant décalées les unes par rapport aux autres, **caractérisée en ce que** les nids d'abeilles (10) de la structure de soutien (8, 9) sont remplis de matière en vrac.

2. Paroi calorifuge selon la revendication 1, **caractérisée en ce que** la matière en vrac est formée par de l'acide silicique et/ou des aérogels.

3. Paroi calorifuge selon l'une quelconque des revendications précédentes, **caractérisée en ce que** la structure de soutien (8, 9) présente quatre couches.

4. Paroi calorifuge selon l'une quelconque des revendications précédentes, **caractérisée en ce que** chaque couche (8, 9) présente une épaisseur de 5 mm.

5. Paroi calorifuge selon l'une quelconque des revendications 1 à 4, **caractérisée en ce que** les nids d'abeilles (10) de la structure de soutien (8, 9) sont formés de manière hexagonale.

6. Appareil frigorifique (1) comprenant un générateur de froid et un espace intérieur réfrigéré (2) qui est entouré par des parois de délimitation calorifugées, **caractérisé en ce que** les parois de délimitation sont formées par une paroi calorifuge selon l'une quelconque des revendications 1 à 5 ou **en ce que** les parois de délimitation logent dans elles-mêmes une paroi calorifuge selon l'une quelconque des revendications 1 à 5.
